Europäisches Patentamt

European Patent Office

Office européen des brevets

(11) Publication number: **0 061 070**
**B1**

(12) **EUROPEAN PATENT SPECIFICATION**

(45) Date of publication of patent specification: **23.07.86**

(21) Application number: **82101910.6**

(22) Date of filing: **10.03.82**

(51) Int. Cl.⁴: **F 16 L 27/08, E 21 B 43/26**

(54) Telescoping boom supported flip-flop service line.

(30) Priority: **16.03.81 US 244529**

(43) Date of publication of application:
**29.09.82 Bulletin 82/39**

(45) Publication of the grant of the patent:
**23.07.86 Bulletin 86/30**

(84) Designated Contracting States:
**AT DE FR GB IT NL**

(56) References cited:
**FR-A-1 521 867**
**US-A-2 746 773**
**US-A-3 396 852**
**US-A-3 942 554**

(73) Proprietor: **FMC CORPORATION**
**200 East Randolph Drive**
**Chicago Illinois 60601 (US)**

(72) Inventor: **Moller, Thomas Allen**
**11256 Essex Avenue**
**Pomoma, California 91766 (US)**
Inventor: **Knight, Houston Wheeler**
**13455 Hadley**
**Whittier California 90601 (US)**

(74) Representative: **Bardehle, Heinz, Dipl.-Ing.**
**Patent- und Rechtsanwälte Bardehle-**
**Pagenberg-Dost-Altenburg & Partner Postfach**
**86 06 20**
**D-8000 München 86 (DE)**

Courier Press, Leamington Spa, England.

## Description

This invention relates to well servicing equipment, and more particularly, to a boom-supported articulated pipeline as mentioned in the precharacterizing part of claim 1 and known e.g. from US—A—3942554.

During the course of producing fluids from a petroleum well it is often desirable or necessary to subject the well to a treatment procedure in order to stimulate its fluid production. This procedure usually involves the injection of fluid under high pressure, such as 14006 kg/cm² to fracture the producing earth formation, or the injection of an acid solution to dissolve or otherwise remove flow obstructing material, thereby increasing the flow of petroleum from the formation into the wall. In order to carry out these well stimulation procedures, it is commonplace to employ an articulated pipe assembly, called a service line, to conduct the fluid from a pump system to the wellhead. Such a service line usually comprises a plurality of straight lengths of rigid pipe interconnected end-to-end by pipe swivel joints, and sufficient pipe unions to facilitate disassembly into sections that can be handled manually.

Where pipe of larger than normal diameter and thus of greater weight is used in order to increase the volume of fluid injected into the well at a given time period, or to reduce the time for injecting a given fluid volume, additional personnel and/or time are required to unload the service line sections from their transport, assemble them and connect the line to the wellhead and then disassemble the line and reload the sections upon completion of fluid injection. Another disadvantage of a conventional service line is that it rests unrestrained on the ground between the transport and the wellhead and thus is free to whip about and possibly injure personnel or equipment if it breaks under pressure. It is also known e.g. from US—A—3942554 to employ an articulated well service pipeline mounted on and supported at all times by a mobile telescoping boom assembly that can be extended from its transport base to carry the service line to a wellhead for connection thereto and for retracting the service pipeline for transport from one location to another. This articulated pipeline may include a relatively large number of fairly short sections of pipe interconnected by a plurality of elbows and swivel joints that extend from and retract into their rest or stowed position is an accordion-like manner. Such accordion-type service lines are relatively expensive to build and it is difficult to drain fluid from these lines because some of the elbows ans swivel joints are mounted below other portions of the service line.

The problem of the present invention is to provide such a pipeline having a reduced number of pipe sections to decrease work and weight while retaining the required length. This problem is solved according to the invention by a pipeline as defined in claim 1.

In particular there is provided an articulated well service pipeline mounted on and supported at all times by a mobile telescoping boom assembly that can be extended from its transport base to carry the service line to a wellhead for connection thereto in a relatively safe, easy, quick and efficient manner. The service line includes a relatively long inboard pipe and long outboard pipe interconnected by a plurality of shorter intermediate pipes and by a plurality of swivel joints. The service line is mounted on the telescoping boom assembly with the inboard and outboard pipes generally parallel to the boom assembly. When the service line is in the fully extended position the inboard, outboard and intermediate pipes are all generally parallel to the boom assembly to provide the maximum length of service line with a minimum length of pipe. Only two or three intermediate pipes are required between the long inboard and outboard pipes so the number of swivel joints is low and the cost of construction of the service line is reduced. The generally straight line construction of the present service line makes it easier to drain off the fluid after the line is used than with the accordion-type folds of pipe used in the some of the prior art service lines. The intermediate pipes flip-flop, or reverse their direction or orientation along the boom as the service line is extended or retracted.

Brief description of the drawings

Figure 1 is a diagrammatic side elevation of a telescoping boom supported articulated service line according to the present invention, showing the boom assembly in the retracted position and the service line folded for transportation on a truck.

Figure 2 is a side elevation of the telescoping boom supported service line of Figure 1, showing the boom extending from its truck supported pedestal base and resting on a jack stand at the outer end, and the service line extending generally parallel to the boom.

Figure 3 is a plan view of the boom supported service line of Figure 2, showing a dual service line.

Figure 4 is a plan view of a boom supported service line similar to the boom supported service line of Figure 2, showing a single service line.

Figures 5—7 are diagrammatic side elevations of the service line of Figures 1 and 2 showing the sequence of flip-flop movement of the intermediate pipes as the line changes from the retracted posiiton shown in Figure 1 to the extended position shown in Figure 2.

Figure 8 is an enlarged sectional view taken along the line 8—8 of Figure 4.

Figure 9 is an enlarged side elevation, partly in section, of a portion of Figure 2 showing a pipe support device which slidably moves along the top of the boom assembly.

Figures 10 and 11 are diagrammatic side elevations of other embodiments of the boom supported articulated service line of Figures 1—9.

Description of the preferred embodiment

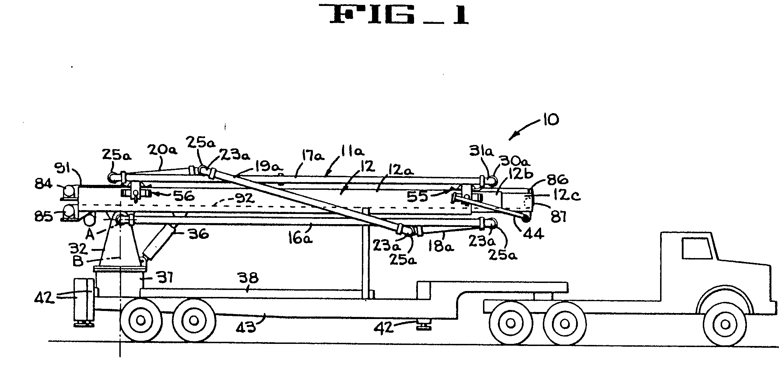

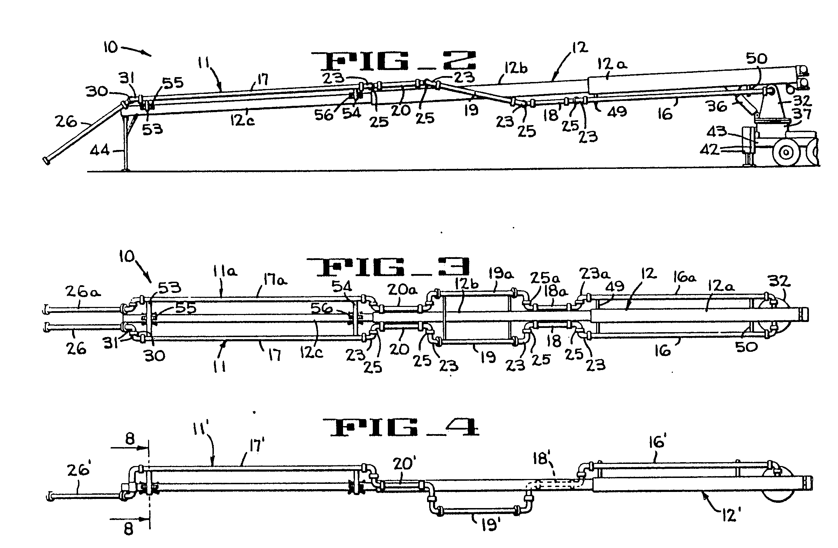

As shown in Figures 1—3, a telescoping boom articulated service line 10 according to the present invention comprises an articulated service line assembly 11 (Fig. 2) mounted on a telescoping boom assembly 12. The service line 10 may include either a single service line assembly 11' as shown in Figure 4 or a pair of substantially parallel assemblies 11, 11a as shown in Figure 3. The service line assembly 11 comprises a long inboard pipe 16 and a long outboard pipe 17 interconnected by a plurality of shorter pipes 18—20 and by a plurality of elbows 23 and swivel joints 25. Another short section of pipe 26 is connected to the outer end of each of the service line assemblies 11, 11a by a swivel joint 30 and a pair of elbows 31. The pipe 26 connects the corresponding service line assembly 11, 11a, 11' to a wellhead (not shown).

The telescoping boom assembly 12 (Figs 1—4) comprises three boom sections 12a, 12b and 12c. The inner section 12a which is not extendable, is pivotally mounted on a turret 32 for rotation in a vertical plane about a horizontal axis A by an elevating cylinder 36. The turret 32 (Fig. 1) is mounted on a cylindrical base 37 for rotation about a vertical axis B, and the entire apparatus is suitably mounted on a subframe platform 38 with extendable stabilizing outriggers 42 and installed on a truck chassis 43 or other suitable mobile transport vehicle for moving the apparatus to the job sites. The details of the telescoping boom 12, and of the means for operating it, are not critical to the present invention, and in fact various types of telescoping boom assemblies such as described in US—A—3841494 and US—A—4016688 are suitable for use with the present invention.

An adjustable jack stand 44 (Fig. 2) can be positioned at the tip of the boom assembly 12 to provide an additional end support to relieve the boom of cantilever loading during the fluid transfer operatin. The jack can be pivotally connected, in a removable manner or otherwise as desired, to the tip of the boom assembly on the outer end of the boom section 12c. Thus, the jack stand can be a separate portable apparatus, or can be crried by the boom to lessen the manual effort required to install and remove it.

The inboard pipes 16, 16a (Figs. 2, 3) of the dual service line apparatus are connected to the inboard section 12a by a pair of supports 49, 50 and are pivotally connected to the turret 32 at their inner ends. The outboard pipes 17, 17a are rigidly connected to a pair of supports 53, 54 which are connected to a pair of sliding support devices 55, 56 (Figs. 1—4, 8 and 9) for movement along the length of the boom support assembly 12.

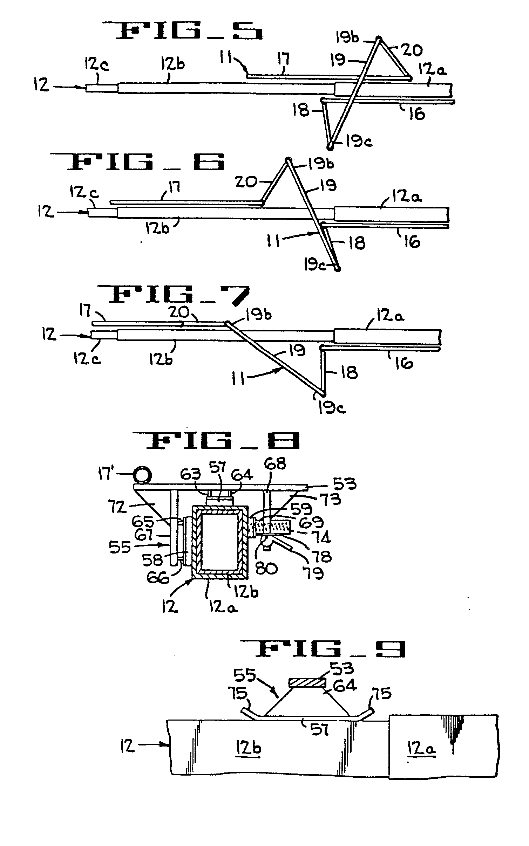

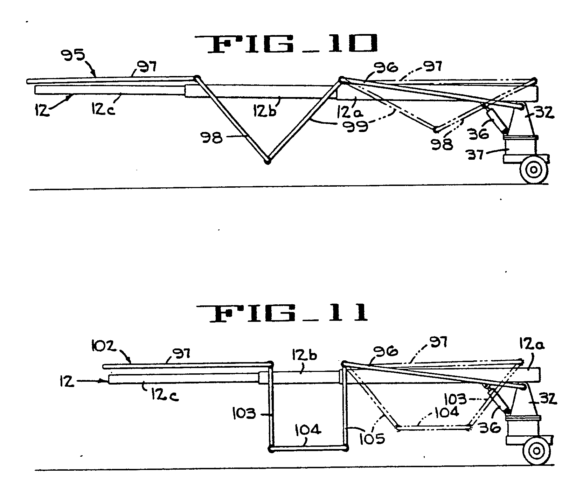

The sliding support devices (Fig. 8 each includes a plurality of pads 57—59 made from a low friction material such as Polytetrafluoroethylene and secured to the corresponding support 53, 54 by a plurality of brackets 63—69. The brackets are reinforced by a pair of gussets 72, 73 connected between the brackets and the support 53. The support device is aligned with the boom sections 12a—12c by a spring 74 mounted between the pad 59 and the bracket 69. The spring 74 (Fig. 8) presses the pad 59 against the boom sections 12a—12c to keep the support device snugly around the boom sections which vary in size. The pads 57—59 each include a pair of turned-up end portions 75 (Fig. 9) to facilitate the sliding movement of the pads along the boom sections 12c to 12a as the service line assembly is extended and retracted along the boom assembly. The pad 59 can be locked against the boom assembly section 12a—12c by a rod 78, secured to the pad 59 and by a lever 79 pivotally connected to the bracket 68 by a pin 80. In the locked position a portion of the lever is forced against the rod 78 when the lever is moved counter-clockwise into the position shown in Figure 8. When the lever is rotated clockwise the pin 78 and the pad 59 are free to move toward and away from the boom.

A pair of winches 84, 85 (Fig. 1), a pair of sheaves 86, 87 and pair of cables 91, 92 provide means for moving the service line assembly 11 from the retracted position shown in Figure 1 to the fully extended position shown in Figures 2—4 and to return it to the retracted position when desired. The cable 92 extends from the winch 85 through the boom assembly 12, over the sheaves 87, 86 to the sliding support device 55. When the boom assembly 12 is in the extended position and the winch 85 is energiszed, the cable 92 pulls the support device 55 and the outer end of the pipes 17, 17a outward into the position shown in Figure 3. When the winch 84 is energized the cable 91 pulls the support device 56 and the attached service line assembly into the retracted position shown in Figure 1, and the boom assembly can be retracted also back into the position shown in Figure 1 by the conventional means (not shown).

Operation of the telescoping boom supported articulated service line according to the present invention can be effected as follows. After transportation to the job site, the vehicle mounted apparatus is positioned at a safe convenient location with respect to the wellhead, and the outriggers 42 extended into functional position. The telescoping boom assembly is aligned with the wellhead, as by rotating the turret 32 and/or elevating or lowering the boom by means of the cylinder 36, and the boom sections 12b, 12c are extended to a desired position near the wellhead. At this time the jack stand 44 is positioned and set, and the winch 85 is energized to pull the service line assembly 12 into position for connecting the outer end of the section of pipe 26 to the wellhead. Following treatment of the well the winch 84 is energized to move the service line into its stowed position (Fig. 1) and the boom is returned to its retracted position for transport to another job site.

The flip-flop action of the shorter intermediate pipes 18—20 as the service line assembly moves between the retracted and the extended positions is shown sequentially in Figures 1, 5, 6, 7 and 2. As the outboard pipe 17 is moved outward from the retracted position (Fig. 1) the upper end 19b of the pipe 19 moves upward (Fig. 5) and the lower end 19c moves downward. Further outward movement of the pipe 17 (Fig. 6) moves end 19b further outboard than end 19c (Fig. 7) until the pipe 19 is reversed in the direction of alignment along the boom assembly 12 into the position shown in Figure 2. The pipes 18, 20 also are flip-flopped into a reverse direction of alignment along the boom assembly. This flip-flop feature allows maximum change in length of the service line between the retracted and the extended positions. The pipes are all positioned end-to-end in a generally straight line when the service line is in an extended position and the inboard and outboard pipes are parallel and side-by-side in the retracted position.

Other embodiments of the present invention

The embodiment shown in Figure 4 differs from the embodiment shown in Figure 3 mainly by using a single service line assembly 11' rather than the dual line assembly shown in Figure 3.

The embodiment of the service line assembly shown in Figure 10 discloses a service line 95 having an inboard pipe 96 and an outboard pipe 97 interconnected by a pair of intermediate pipes 98, 99, with the intermediate pipes 98, 99 moving in a vertical plane as the service line is extended and retracted. The retracted pipes are shown in the phantom lines of Figure 10.

The embodiment shown in Figure 11 discloses another service line 102 having a trio of intermediate pipes 103—105 which also move in a vertical plane as the service line is extended and retracted.

The present invention provides a service pipeline having a large change in length between the extended position and the retracted position while using a few intermediate sections of pipe connected between an inboard and an outboard pipe. The intermediate pipes flip-flop, or change their direction of orientation, as the pipeline changes from an extended position to a retracted position.

**Claims**

1. A boom-supported articulated pipeline (11) for use with a telescoping boom assembly (12) having a plurality of boom sections (12a, 12b, 12c), said pipeline (11) having an inboard pipe (16) mounted on said boom assembly (12) and attached to an inboard boom section (12a), an outboard pipe (17) mounted on said boom assembly (12) and a plurality of intermediate pipes (18, 19, 20) and means (25) for pivotally connecting the ends of said different pipes (16, 17, 18, 19, 20) to each other, characterized in that said outboard pipe (17) is movable along the length of said boom assembly (12) and in that said intermediate pipes (18, 19, 20) reverse the direction of the component of orientation along said boom assembly (12) and said inboard and outboard pipes (16, 17) maintain direction of the component of orientation along said boom assembly (12) when said pipeline (11) is moved from its retracted to its extended position.

2. A pipeline as defined in claim 1, characterized in that said inboard pipe (16) and said outboard pipe (17) each have a length substantially equal to the length of said inboard boom section (12a).

3. A pipeline as defined in claim 1 or 2, characterized by a mobile transport means (43) for said boom assembly (12), and means (32, 37, 38, 42) for mounting said boom assembly (12) on said transport means (43).

4. A pipeline as defined in claim 3, characterized by pivot means (36) between said boom assembly (12) and said transport means to facilitate elevating and lowering said boom assembly (12) about a generally horizontal axis (A).

5. A pipeline as defined in claim 3 or 4, characterized by pivot means (32) between said boom assembly (12) and said transport means to facilitate pivotal movement of said boom assembly (12) with respect to said transport means about a generally vertical axis (B).

6. A pipeline as defined in one of claims 1 to 5, characterized by a sliding support device (55, 56) for sliding over said boom assembly (12) while supporting a portion (17) of said pipeline (11), said support device (55, 56) having means (74) for adjusting to the varying widths of said boom assembly (12) and for maintaining a constant distance between said boom assembly (12) and said supported pipeline (11) as said support device (55, 56) moves along the length of said boom assembly (12).

7. A pipeline as defined in claim 6, characterized by means (78, 79, 80) for selectively clamping said support device (55, 56) in a fixed position on said boom assembly (12).

8. A pipeline as defined in one of claims 1 to 7, characterized by means (53, 54, 63 to 69) for retaining said outboard pipe (17) parallel to said boom assembly (12) as said outboard pipe (17) is moved along the length of said boom assembly (12).

9. A pipeline as defined in one of claims 1 to 8, characterized in that said intermediate pipes (18, 19, 20) are positioned end-to-end to form a generally straight line with said inboard and said outboard pipes (16, 17) when said pipeline (11) is in its extended position and said inboard and said outboard pipes (16, 17) are parallel and side-by-side in the retracted position of said pipeline (11).

10. A pipeline as defined in one of claims 1 to 9, characterized in that said inboard and said outboard pipes (16, 17) are both retained generally parallel to said boom assembly (12) as said pipeline (11) moves between its retracted position and its extended position.

## Patentansprüche

1. Mit einem Ausleger abgestützte Pipeline (11) zur Verwendung mit einer Teleskop - Auslegeranordnung (12) mit einer Vielzahl von Abschnitten (12a, 12b, 12c), wobei die Pipeline (11) ein and der Auslegeranordnung (12) montiertes und an einem Innenabschnitt (12a) des Auslegers befestigtes Innenrohr (16), ein an der Auslegeranordnung (12) angeordnetes Außenrohr (17), eine Vielzahl von Zwischenrohren (18, 19, 20) und eine Einrichtung (25) aufweist, um die Enden der verschiedenen Rohre (16, 17, 18, 19, 20) schwenkbar miteinander zu verbinden, dadurch gekennzeichnet, daß das Außenrohr (17) längs der Länge der Auslegeranordnung (12) bewegbar ist, daß die Zwischenrohre (18, 19, 20) die Richtung der Orientierungskomponente längs der Auslegeranordnung (12) umkehren, und daß das Innen- und das Außenrohr (16, 17) die Richtung der Orientierungskomponente entlang der Auslegeranordnung (12) beibehalten, wenn die Pipeline (11) aus ihrer zurückgezogenen in ihre ausgefahrene Stellung gebracht wird.

2. Pipeline nach Anspruch 1, dadurch gekennzeichnet, daß die Länge des Innenrohrs (16) und des Außenrohrs (17) jeweils im wesentlichen gleich der Länge des Ausleger - Innenabschnitts (12a) ist.

3. Pipeline nach Anspruch 1 oder 2, gekennzeichnet durch eine fahrbare Transporteinrichtung (43) für die Auslegeranordnung (12) und durch eine Einrichtung (32, 37, 38, 42) zum Anordnen der Auslegeranordnung (12) an der Transporteinrichtung (43)

4. Pipeline nach Anspruch 3, gekennzeichnet durch eine Schwenkeinrichtung (36) zwischen der Auslegeranordnung (12) und der Transporteinrichtung, um das Anheben und Absenken der Auslegeranordnung (12) um eine allgemein horizontale Achse (A) zu erleichtern.

5. Pipeline nach Anspruch 3 oder 4, gekennzeichnet durch eine Schwenkeinrichtung (32) zwischen der Auslegeranordnung (12) und der Transporteinrichtung, um eine Schwenkbewegung der Auslegeranordnung (12) bezüglich der Transporteinrichtung um eine allgemein vertikale Achse (B) zu erleichtern.

6. Pipeline nach einem der Ansprüche 1 bis 5, gekennzeichnet durch eine Gleitstützvorrichtung (55, 56) zum Gleiten auf der Auslegeranordnung (12) während sie einen Teil (17) der Pipeline (11) stützt, wobei die Stützvorrichtung (55, 56) eine Einrichtung (74) aufweist, welche eine Anpassung an die unterschiedlichen Weiten der Auslegeranordnung (12) einstellt und einen konstanten Abstand zwischen der Auslegeranordnung (12) und der abgestützten Pipeline (11) aufrecht hält, während die Stützvorrichtung (55, 56) sich längs der Länge der Auslegeranordnung (12) bewegt.

7. Pipeline nach Anspruch 6, gekennzeichnet durch eine Einrichtung (78, 79, 80) zum wahlweisen Festspannen der Stützvorrichtung (55, 56) in einer festen Lage an der Auslegeranordnung (12).

8. Pipeline nach einem der Ansprüche 1 bis 7, gekennzeichnet durch eine Einrichtung (53, 54, 63 bis 69), um das Außenrohr (17) parallel zur Auslegeranordnung (12) zu halten, während das Außenrohr (17) entlang der Länge der Auslegeranordnung (12) bewegt wird.

9. Pipeline nach einem der Ansprüche 1 bis 8, dadurch gekennzeichnet, daß die Zwischenrohre (18, 19, 20) endseitig angeordnet sind, um mit dem Innen- und Außenrohr (16, 17) eine im wesentlichen gerade Linie zu bilden, wenn sich die Pipeline (11) ihrer ausgestreckten Lage befindet, und daß in der zurückgezogenen Lage das Innenrohr (16) und das Außenrohr (17) parallel und Seite an Seite angeordnet sind.

10. Pipeline nach einem der Ansprüche 1 bis 9, dadurch gekennzeichnet, daß das Innen- und das Außenrohr (16, 17) allgemein parallel zur Auslegeranordnung (12) gehalten werden, während sich die Pipeline (11) aus ihrer eingefahrenen in die ausgestreckte Position bewegt.

## Revendications

1. Canalisation articulée (11) supportée par une flèche, destinée à être utilisée avec une flèche télescopique (12) ayant plusieurs tronçons (12a, 12b, 12c), la canalisation (11) ayant une tuyauterie interne (16) montée sur la flèche (12) et fixée à un tronçon interne (12a) de flèche, une tuyauterie externe (17) montée sur la flèche (12) et plusieurs tuyauteries intermédiaires (18, 19, 20), et un dispositif (25) de raccordement tournant des extrémités des tuyauteries différentes (16, 17, 18, 19, 20) les unes sur les autres, caractérisée en ce que la tuyauterie externe (17) est mobile suivant la longueur de la flèche (12), et en ce que les tuyauteries intermédiaires (18, 19, 20) changent le sens de la composante d'orientation parallèle à la flèche (12), et les tuyauteries interne et externe (16, 17) conservent le sens de la composante d'orientation parallèle à la flèche (12) lorsque la canalisation (11) est déplacée de sa position repliée à sa position dépliée.

2. Canalisation selon la revendication 1, caractérisée en ce que la tuyauterie interne (16) et la tuyauterie externe (17) ont chacune une longueur sensiblement égale à celle du tronçon interne (12a) de flèche.

3. Canalisation selon l'une des revendications 1 et 2, caractérisée par un dispositif mobile (43) de transport de la flèche (12) et par un dispositif (32, 37, 38, 42) de montage de la flèche (12) sur le dispositif de transport (43).

4. Canalisation selon la revendication 3, caractérisée par un dispositif d'articulation (36) placé entre la flèche (12) et le dispositif de transport et destiné à faciliter le soulèvement et l'abaissement de la flèche (12) autour d'un axe de direction générale horizontale (A).

5. Canalisation selon l'une des revendications 3 et 4, caractérisée par un dispositif d'articulation (32) placé entre la flèche (12) et le dispositif de transport afin qu'il facilite le pivotement de la flèche (12) par rapport au dispositif de transport autour d'un axe de direction générale verticale (B).

6. Canalisation selon l'une quelconque des revendications 1 à 5, caractérisée par un dispositif coulissant de support (55, 56) destiné à coulisser sur la flèche (12) tout en supportant une partie (17) de la canalisation (11), le dispositif de support (55, 56) comprenant un dispositif (74) de réglage en fonction des largeurs variables de la flèche (12) et de maintien d'une distance constante entre la flèche (12) et la canalisation supportée (11) lorsque le dispositif de support (55, 56) se déplace sur la longueur de la flèche (12).

7. Canalisation selon la revendication 6, caractérisée par un dispositif (78, 79, 80) destiné à serrer sélectivement le dispositif de support (55, 56) en position fixe sur la flèche (12).

8. Canalisation selon l'une quelconque des revendications 1 à 7, caractérisée par un dispositif (53, 54, 63 à 69) destiné à retenir la tuyauterie externe (17) parallèlement à la flèche (12) lorsque la tuyauterie externe (17) est déplacée le long de la flèche (12).

9. Canalisation selon l'une quelconque des revendications 1 à 8, caractérisée en ce que les tuyauteries intermédiaires (18, 19, 20) sont placées bout à bout afin qu'elles forment une canalisation sensiblement rectiligne avec les tuyauteries interne et externe (16, 17) lorsque la canalisation (11) est dans sa position allongée et les tuyauteries interne et externe (16, 17) sont parallèles et placées côte à côte dans la position repliée de la canalisation (11).

10. Canalisation selon l'une quelconque des revendications 1 à 9, caractérisée en ce que les tuyauteries interne et externe (16, 17) sont toutes deux retenues en direction générale parallèle à la flèche (12) lorsque la canalisation (11) se déplace entre sa position repliée et sa position allongée.

# FIG_1

FIG_2  FIG_3  FIG_4

FIG_5

FIG_6

FIG_7

FIG_8

FIG_9

# FIG_10

95 97 96 97
12 12c 12b 12a 32
98 99 98 36
37

# FIG_11

102 97 12b 96 97 12a
12 12c 32
103 103
104 104 36
105